# EUROPÄISCHE PATENTSCHRIFT

(11) **EP 1 086 331 B1**
(45) Veröffentlichungstag und Bekanntmachung des Hinweises auf die Patenterteilung: **06.02.2002**
(21) Anmeldenummer: 99927860.9
(22) Anmeldetag: 02.06.1999
(51) Int. Cl.: F16L 55/033, B60K 13/04, F01N 7/18

(54) **AUFHÄNGEÖSE FÜR EINE SCHWINGENDE LAST, INSBESONDERE FÜR EINE ABGASANLAGE EINES KRAFTFAHRZEUGS**
SUSPENSION EYE FOR A VIBRATING LOAD, ESPECIALLY FOR AN EXHAUST GAS INSTALLATION OF A MOTOR VEHICLE
OEIL DE SUSPENSION POUR CHARGE OSCILLANTE, NOTAMMENT POUR LE SYSTEME DE GAZ D'ECHAPPEMENT D'UNE AUTOMOBILE

(30) Priorität: 09.06.1998 DE 19825810
(43) Veröffentlichungstag der Anmeldung: 28.03.2001
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE); STEINMAIER, Klaus, D-84478 Waldkraiburg (DE)
(74) Vertreter: Goetz, Rupert, Dipl.-Ing.
(86) Internationale Anmeldenummer: EP9903849
(87) Internationale Veröffentlichungsnummer: WO9964776

(56) Entgegenhaltungen:
- DE-A- 2 621 771
- DE-C- 675 502
- US-A- 5 271 595

## Beschreibung

Die Erfindung betrifft eine Aufhängeöse nach dem Oberbegriff des Anspruchs 1.

Eine Aufhängeöse dieser Gattung ist aus US-A-5,271,595 bekannt. Dort verbindet die beiden Zwischenzonen eine gewölbte, aus Elastomer bestehende Brücke, die mit dem ringförmigen Elastomerkörper in einem Stück hergestellt ist und einen bogenförmigen Schlitz aufweist, der sich von einer Zwischenzone zur anderen erstreckt. In den Schlitz ist eine bogenförmige Blattfeder eingesetzt, die an ihren beiden, je einer der beiden Zwischenzonen des ringförmigen Elastomerkörpers benachbarten Enden zu je einer Öse eingerollt ist. Die Blattfeder hat in entspanntem Zustand, ehe sie in den Schlitz eingesetzt wird, einen größeren Krümmungsradius als der Schlitz. Damit die Blattfeder in den Schlitz eingesetzt werden kann, müssen ihre Enden zusammengedrückt werden, so daß die Blattfeder ungefähr den gleichen Krümmungsradius erhält wie der Schlitz. Sobald die Enden der Blattfeder nach dem Einsetzen in den Schlitz freigegeben worden sind, entfernen sie sich voneinander, so daß die Brücke aus Elastomer unter Zugspannung gesetzt wird; die Blattfeder selbst ist dementsprechend als Druckfeder vorgespannt. Wenn die Aufhängeöse als Ganzes von einer Zugkraft belastet wird und dadurch der Abstand zwischen ihren beiden Befestigungszonen vergrößert wird, verstärkt sich die Wölbung der Brücke und der in deren Schlitz aufgenommenen Blattfeder; die Aufhängeöse als Ganzes erhält somit eine gewünschte progressive Federcharakteristik. Allerdings hat diese aus US-A-5,271,595 bekannte Aufhängeöse nur dann eine befriedigende Lebensdauer, wenn stärkere Belastungen, um derentwillen die Federprogression eigentlich vorgesehen ist, nicht allzu häufig vorkommen.

Entsprechendes gilt auch für eine andere, aus DE-A-1 505 498 bekannte Aufhängeöse der eingangs genannten Gattung.

Der Erfindung liegt deshalb die Aufgabe zugrunde, eine Aufhängeöse für eine schwingende Last, insbes. für eine Abgasanlage eines Kraftfahrzeugs, derart zu gestalten, daß sie auch bei hoher spezifischer Belastung eine lange Lebensdauer aufweist.

Die Aufgabe ist bei einer Aufhängeöse der eingangs beschriebenen Gattung erfindungsgemäß mit den kennzeichnenden Merkmalen des Anspruchs 1 gelöst.

Die Erfindung beruht auf der Erkenntnis, daß bei den bekannten Aufhangeösen der eingangs beschriebenen Gattung die Brükke, über die sich die Zwischenzonen des Elastomerkörpers gegenseitig abstützen sollen, schon dann an Wirksamkeit verliert, wenn sie äußerlich noch unbeschädigt ist. In den Zwischenzonen, in denen die Druckfeder mit ihren Enden die biegsame Einlage stützen soll, konzentrieren sich Spannungen, die allmählich zu Zermürbungserscheinungen führen, die Wirksamkeit der Druckfeder mindern und in ungünstigen Fällen sogar zu Beschädigungen der biegsamen Einlage führen. Solche Spannungshäufungen lassen sich erfindungsgemäß durch die starren Stützkörper vermeiden, zwischen denen die Druckfeder angeordnet ist, und über die sie auf die beiden Zwischenzonen des Elastomerkörpers und die biegsame Einlage einwirkt.

Ausführungsbeispiele der Erfindung werden im folgenden anhand schematischer Zeichnungen mit weiteren Einzelheiten erläutert. Es zeigen:
- Fig.1: eine erste Ausführungsform einer erfindungsgemäßen Aufhängeöse in Seitenansicht,
- Fig.2: den waagerechten Schnitt II-II in Fig.1,
- Fig.3: den senkrechten Schnitt III-III in Fig.1,
- Fig.4: eine zweite Ausführungsform einer erfindungsgemäßen Aufhängeöse in Seitenansicht,
- Fig.5: den waagerechten Schnitt V-V in Fig.4 und
- Fig.6: den senkrechten Schnitt VI-VI in Fig.4.

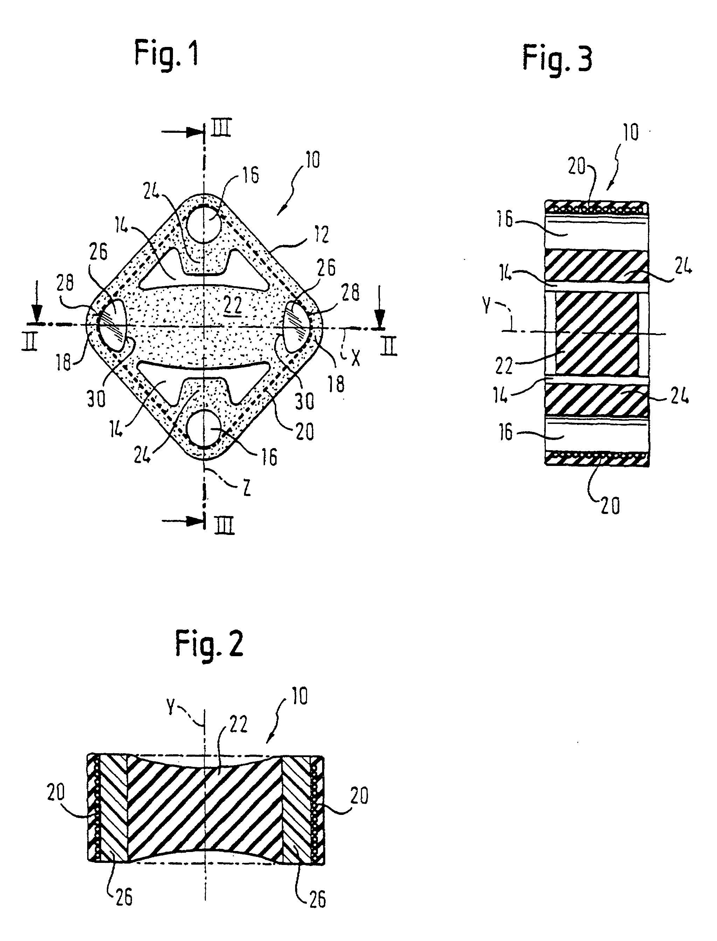

Die in Fig.1 bis 3 dargestellte Aufhängeöse hat einen ringförmigen Elastomerkörper 10 mit einer Außenwand 12, die in unbelastetem Zustand der Aufhängeöse in Seitenansicht gemäß Fig.1 die Form eines Quadrats mit abgerundeten Ecken aufweist. Der Elastomerkörper 10 ist in bezug auf eine bei üblicher, in Fig.1 dargestellter Anordnung der Aufhängeöse waagerechte X-Y Ebene sowie in bezug auf eine senkrechte Y-Z Ebene spiegelsymmetrisch und weist zwei Aussparungen 14 auf, von denen jede ungefähr die Form eines liegenden **B** aufweist. Die in Y-Richtung gemessene Dicke des Elastomerkörpers 10 entspricht ungefähr der Hälfte seiner aus Fig.1 ersichtlichen Seitenlänge. Im Bereich seiner oberen und unteren Ecken hat der Elastomerkörper 10 je eine Befestigungszone 16, die von einem zylindrischen Loch gebildet ist. In diese Befestigungszone 16 läßt sich je sich ein entsprechender Zapfen einsetzen, beispielsweise in die obere Befestigungszone ein an der Bodenplatte eines Kraftfahrzeugs befestigter Zapfen, und in die untere Befestigungszone ein an einem Auspufftopf befestigter Zapfen. Die beiden Befestigungszonen 16 können aber auch mit je einer in den Elastomerkörper 10 eingebetteten, insbesondere einvulkanisierten, Buchse aus Stahl oder aus einem wäremeisolierenden harten Werkstoff ausgekleidet sein. An den seitlichen, im Bereich der X-Y Ebene liegenden Ecken weist der Elastomerkörper 10 je eine Zwischenzone 18 auf.

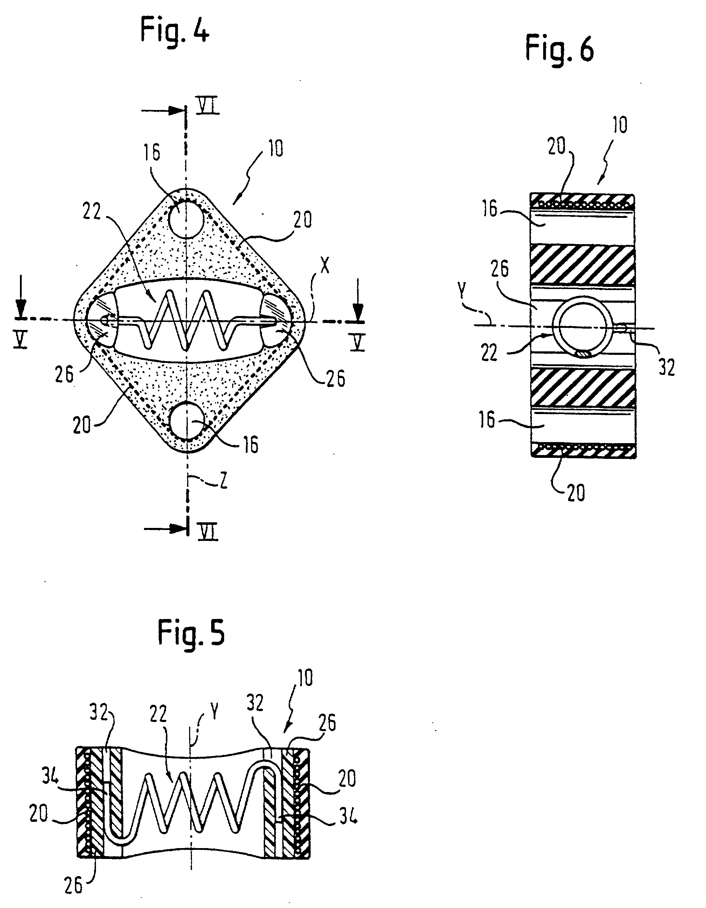

In den Elastomerkörper 10 ist eine biegsame, jedoch nicht nennenswert dehnbare Einlage 20 eingebettet, die sich um die beiden Befestigungszonen 16 herum und durch die Zwischenzonen 18 erstreckt. In beiden dargestellten Beispielen ist die Einlage 20 von einer Wicklung aus Faden oder Draht gebildet, die nahezu über die gesamte, in Y-Richtung gemessene Breite des Elastomerkörpers gleichmäßig verteilt ist. Die Einlage 20 kann auch aus flächigem Material, z.B. Bändern, Folien oder Geweben bestehen. Gemäß Fig.1 und 4 ist die Einlage 20 ringförmig insich geschlossen und in überall gleichem Abstand von der Außenwand 12 des Elastomerkörpers 10 angeordnet.

Zwischen den beiden Zwischenzonen 18 ist eine querliegende Druckfeder 22 angeordnet. Bei der in Fig.1 bis 3 dargestellten Aufhängeöse besteht die Druckfeder 22 aus dem selben Elastomermaterial wie der Elastomerkörper 10, ist mit diesem in einem Stück vulkanisiert und zwischen zwei Puffern 24 angeordnet. Die Puffer 24 sind ebenfalls einstückig am Elastomerkörper 10 ausgebildet und erstrecken sich in je eine der beiden Aussparungen 14 soweit hinein, daß sie in unbelastetem Zustand der Aufhängeöse nur einen dünnen Spalt zwischen sich und dem mittleren Bereich der Druckfeder 22 freilassen. Dadurch ist die Druckfeder 22 daran gehindert, in Richtung zu einer der Aufhängezonen 16 hin, nach oben oder nach unten, auszuknicken. Die beiden Puffer 24 begrenzen das Maß, um das die beiden Befestigungszonen 16 bei Druckbelastung der Aufhängeöse einander genähert werden können, auf wenige Millimeter.

An den beiden Enden der Druckfeder 22 ist je ein verhältnismäßig starrer, beispielsweise aus Polyamid bestehender Stützkörper 26 in den Elastomerkörper 10 eingebettet. Jeder der beiden Stützkörper 26 hat eine ungefähr kreiszylindrisch konvex gerundete äußere, d.h. von der Y-Z-Ebene abgewandte Auflagefläche 28 für die Einlage 20 und eine im wesentliche ebene oder leicht konvexe innere Basisfläche 30, die sich über den größeren Teil der angrenzenden Basisfläche der Druckfeder 22 erstreckt und für eine gleichmäßige Kraftübertragung zwischen dieser und der Einlage 20 sorgt.

In Fig.2 ist die Druckfeder 22 in unbelastetem Zustand mit vollen Linien und bei Nennlast mit strichpunktierten Linien dargestellt.

Mit Hilfe der Stützkörper 26 läßt sich eine präzise Anordnung der Einlage 20 in den Zwischenzonen 18 beim Vulkanisieren des Elastomerkörpers gewährleisten. Zu diesem Zweck werden die Stützkörper 26 in eine Vulkanisierform eingesetzt, die Mittel zum Fixieren der Stützkörper aufweist, und dann wird die zuvor ringförmig gewickelte Einlage 20 um die Stützkörper 26 und um in den Befestigungszonen 16 angeordnete Zapfen oder Buchsen herumgelegt. Beim Schließen der Vulkanisierform werden diese Zapfen oder Buchsen und die Stützkörper 26 fixiert und dadurch auch die Anordnung der Einlage 20 genau festgelegt.

Die Aufhängeöse gemäß Fig.4 bis 6 unterscheidet sich von der in Fig.1 bis 3 dargestellten im wesentlichen dadurch, daß die Druckfeder 22 ein gesondertes Bauteil ist, nämlich eine wendelförmige Drahtfeder, und daß die beiden Stützkörper 26 je eine Federhalterung 32 aufweisen, die je ein abgewinkeltes Ende 34 der Druckfeder 22 aufnimmt. In diesem Fall sind die Stützkörper 26 nicht vollständig in den Elastomerkörper 10 eingebettet sondern an ihn nur anvulkanisiert; beim Vulkanisieren des Elastomerkörpers 10 können die Federhalterungen 32 zum Fixieren der Stützkörper 26 verwendet werden. Die Druckfeder 22 wird nachträglich mit Vorspannung in Richtung der X-Achse eingebaut, indem die Enden 34 der Druckfeder in je eine der Federhalterungen 32 in bzw. entgegen der Richtung der X-Achse eingeschoben werden. Für Elastomerkörper 10 einer bestimmten Größe können wahlweise einsetzbare Druckfedern mit unterschiedlicher Vorspannung und unterschiedlich steiler Kennlinie bereitgehalten werden.

## Patentansprüche

1. Aufhängeöse für eine schwingende Last, insbes, für eine Abgasanlage eines Kraftfahrzeugs, mit
- einem ringförmigen Elastomerkörper (10), der zwei einander gegenüberliegende Befestigungszonen (16) und, zwischen diesen, zwei einander ebenfalls gegenüberliegende Zwischenzonen (18) in einer Anordnung aufweist, bei der die Befestigungszonen (16) sich bei Zugbelastung der Aufhängeöse von einander entfernen, während die Zwischenzonen (18) sich einander nähern,
- einer biegsamen Einlage (20), die in den Elastomerkörper (10) so eingebettet, insbesondere einvulkanisiert ist, daß sie bei Zugbelastung der Aufhängeöse Zugkräfte über die Zwischenzonen (18) von einer Befestigungszone (16) zur anderen überträgt, und
- einer querliegenden Druckfeder (22) mit an ihren Enden angeordneten starren Stützkörpern (26), über die sich die Zwischenzonen (18) aneinander abstützen,
**dadurch gekennzeichnet, daß** die beiden starren Stützkörper (26) in je eine der beiden Zwischenzonen (18) des Elastomerkörpers (10) mindestens teilweise eingebettet sind und an ihren einander abgewandten Seiten je eine abgerundete Auflagefläche (28) aufweisen, auf der die Einlage (20) aufliegt.

2. Aufhängeöse nach Anspruch 1,
**dadurch gekennzeichnet, daß** die Stützkörper (26) an ihren einander zugewandten seiten je eine annähernd ebene Basisfläche (30) aufweisen.

3. Aufhängeöse nach einem der Ansprüche 1 oder 2,
**dadurch gekennzeichnet, daß** die stützkörper (26) je eine Federhalterung (32) aufweisen, und die Druckfeder (22) aus Federstahl besteht und ihre Enden (34) in je eine der Federhalterungen (32) eingreifen.

## Claims

1. A suspension lug for a swinging load, especially an exhaust system for a motor vehicle, comprising
- a ring-shaped elastomer body (10) having two oppositely located fixing zones (16) and, between them, two also oppositely located intermediate zones (18) arranged such that the fixing zones (16) move away from each other when the suspension lug is subjected to tensile loading while the intermediate zones (18) approach each other,
- a flexible insert (20) which is embedded, especially vulcanised, in the elastomer body (10) in such a way that when the suspension lug is subjected to tensile loading it transmits tensile forces via the intermediate zones (18) from one fixing zone (16) to the other, and
- a transversely located compression spring (22) with rigid support members (26) arranged at its ends via which the intermediate zones (18) support each other,
**characterised in that** the two rigid support members (26) are at least partly embedded in one each of the two intermediate zones (18) of the elastomer body (10) and have at each of their sides facing away from each other a rounded off resting surface (28) on which the insert rests.

2. The suspension lug according to claim 1
**characterised in that** the support members (26) comprise an approximately plane base surface (30) each at their sides that face one another.

3. The suspension lug according to one of claims 1 or 2,
**characterised in that** the support members (26) comprise a spring mounting device (32) each and the compression spring (22) is made of spring steel and its ends (34) engage one of the spring mounting devices (32) each.

## Revendications

1. Oeillet de suspension pour une charge oscillante, en particulier pour un système de gaz d'échappement d'un véhicule automobile, comportant :
- un corps en élastomère de forme annulaire (10), qui présente deux zones de fixation (16) opposées l'une à l'autre et, entre celles-ci, deux zones intermédiaires (18) également opposées l'une à l'autre dans un agencement dans lequel, lorsque l'oeillet de suspension est sollicité par traction, les zones de fixation (16) s'éloignent l'une de l'autre tandis que les zones intermédiaires (18) se rapprochent l'une de l'autre,
- une garniture (20) souple qui est encastrée dans le corps en élastomère (10), en particulier par vulcanisation, de sorte que lorsque l'oeillet de suspension est sollicité par traction, elle transmet des forces de traction depuis une zone de fixation (16) à l'autre par l'intermédiaire de la zone intermédiaire (18), et
- un ressort de compression (22) situé transversalement, avec des corps de soutien (26) rigides agencés à ses extrémités, par l'intermédiaire desquels les zones intermédiaires (18) se soutiennent mutuellement,
**caractérisé en ce que** les deux corps de soutien (26) rigides sont chacun au moins partiellement encastrés dans une des deux zones intermédiaires (18) du corps d'élastomère (10), et **en ce que** sur leurs côtés détournés l'un de l'autre, ils présentent chacun une surface d'appui (28) arrondie sur laquelle repose la garniture (20).

2. Oeillet de suspension selon la revendication 1, **caractérisé en ce que** les corps de soutien (26) présentent sur leurs côtés tournés l'un vers l'autre une surface de base (30) respective approximativement plane.

3. Oeillet de fixation selon l'une ou l'autre des revendications 1 et 2, **caractérisé en ce que** les corps de soutien (26) présentent chacun un support élastique (32), et le ressort de compression (22) est en acier-ressort, et **en ce que** ses extrémités (34) s'engagent chacune dans l'un des supports de ressort (32).
